# EUROPEAN PATENT APPLICATION

(11) **EP 4 659 579 A1**
(43) Date of publication of application: **10.12.2025**
(21) Application number: 24748809.1
(22) Date of filing: 24.01.2024
(51) Int. Cl.: A01N 25/00, A01N 27/00, A01N 37/44, A01N 57/12, A01N 57/16, A01P 21/00, A01N 37/36, A01N 37/42

(54) **PENETRATION ENHANCER**

(30) Priority: 31.01.2023 JP 2023013389
(71) Applicant: Ibiden Co., Ltd, Ogaki-shi, Gifu 503-8604 (JP)
(72) Inventor: KARIYA, Satoru, Ogaki-shi, Gifu 503-8604 (JP); ISHINO, Nobuyoshi, Ogaki-shi, Gifu 503-8604 (JP)
(74) Representative: Hoefer & Partner Patentanwälte mbB
(86) International application number: PCT/JP2024/001934
(87) International publication number: WO 2024/162111

(57) **Abstract**

An object of the present invention is to provide a penetration promoter and an agricultural composition, which are capable of promoting penetration of an organic substance into a plant tissue.

A penetration promoter for an organic substance for plants, containing at least one compound selected from an oxo fatty acid, or a derivative thereof or a salt thereof, and a hydroxy fatty acid, or a derivative thereof or a salt thereof. An agricultural composition containing: (a) at least one compound selected from an oxo fatty acid, or a derivative thereof or a salt thereof, and a hydroxy fatty acid, or a derivative thereof or a salt thereof; and (b) at least one organic substance for plants.

## Description

### TECHNICAL FIELD

The present invention relates to a penetration promoter.

### BACKGROUND ART

In agricultural formulations, surfactants are often used for improving chemical or physical stability or suppressing degradation of an agrochemical medicinal component, or for improving application performance. In addition, the activity of a foliage treatment agrochemical sprayed onto an aerial part of a plant is affected not only by the activity of a medicinal component itself in a pesticide, but also by an attachment amount and spread of a spray liquid on a foliage surface and absorption and migration amounts thereof to a plant tissue. The surfactant is known to assist penetration of a bioactive component into the plant tissue and uptake thereof by the plant. Reduction in influence of an agrochemical medicinal component on an environment is a conventional problem, but the surfactant is also problematic in terms of environmental load caused by remaining of the surfactant due to reasons such as difficulty in biodegradation after application.

Patent Literature 1 discloses a surfactant composition for an agrochemical formulation containing: one or more ester type nonionic surfactants selected from polyoxyalkylene sorbitan fatty acid esters and triglyceride derivatives; and specific two types of ester succinate salts.

### CITATIONS LIST

### PATENT LITERATURE

Patent Literature 1: JP 2000-95606 A

### SUMMARY OF INVENTION

### TECHNICAL PROBLEMS

The surfactant composition for an agrochemical formulation of Patent Literature 1 is likely to undergo biodegradation after application, but is not a naturally occurring substance, and thus is still considered to have a high environmental load. In addition, the surfactant composition for an agrochemical formulation of Patent Literature 1 aims at improving the application performance, including emulsification, dispersion and diffusion, of an agrochemical medicinal component, and Patent Literature 1 does not disclose its ability to allow penetration of the agrochemical medicinal component.

The present invention has been made in view of the above problems, and an object thereof is to provide a penetration promoter with a low environmental load, which can assist penetration, in a plant, of an organic substance having a useful effect on plants when applied to the plant, and the present invention provides a composition containing the penetration promoter.

### SOLUTIONS TO PROBLEMS

The present invention relates to a penetration promoter for an organic substance for plants, containing at least one compound selected from an oxo fatty acid, or a derivative thereof or a salt thereof, and a hydroxy fatty acid, or a derivative thereof or a salt thereof.

Both the oxo fatty acid and the hydroxy fatty acid are desirably unsaturated fatty acids. In addition, in the case of an unsaturated oxo fatty acid, the number of carbon atoms is desirably 4 or more because it is more stably present when double bonds in a carbonyl group and the oxo fatty acid are conjugated. In addition, in the case of an unsaturated hydroxy fatty acid, the number of carbon atoms is desirably 4 or more because it is more stable when a hydroxy group is not bonded to carbon atoms bonded to each other by a double bond.

The organic substance for plants is preferably a plant hormone or a precursor in biosynthesis of the plant hormone.

The organic substance for plants is preferably at least one selected from the group consisting of an agrochemical, a plant growth promoter, a growth stimulant, an organic elicitor, and a functional nutrient, or a precursor thereof.

The organic substance for plants is preferably at least one selected from the group consisting of a terpene, a nucleic acid, an amino acid, and a phospholipid.

The oxo fatty acid is preferably an oxo fatty acid represented by the following formula (I):

HOOC-(R¹)-CH=CH-C(=O)-R² (I)

wherein
R¹ represents a linear or branched, saturated or unsaturated hydrocarbon group containing 6 to 12 carbon atoms, R² represents an alkyl group having 2 to 8 carbon atoms which may contain one or more branches and/or double bonds,
or the following formula (II):

   HOOC-(R³)-C(=O)-CH=CH-R⁴ (II)

   wherein
   R³ represents a linear or branched, saturated or unsaturated hydrocarbon group containing 3 to 10 carbon atoms, and R⁴ represents a hydrocarbon group having 4 to 11 carbon atoms which may contain one or more branches and/or double bonds.

Preferably, in the formula (I), R¹ contains a double bond forming a conjugated double bond with a double bond between α carbon and β carbon of a carbonyl group in the formula (I), and, in the formula (II), R⁴ contains a double bond forming a conjugated double bond with a double bond between α carbon and β carbon of a carbonyl group in the formula (II).

The oxo fatty acid represented by the formula (I) and the oxo fatty acid represented by the formula (II) are preferably ketooctadecadienoic acids.

Preferably, in the formula (I), R¹ is a linear or branched hydrocarbon group having 9 carbon atoms, and R² is an alkyl group having 5 carbon atoms, and, in the formula (II), R³ is a linear or branched hydrocarbon group having 7 carbon atoms, and R⁴ has a structure of CH₃-CH₂-CH₂-CH₂-CH₂-CH=CH- having 7 carbon atoms.

The oxo fatty acid is preferably at least one selected from the group consisting of 9-oxo-10,12-octadecadienoic acid, 13-oxo-9,11-octadecadienoic acid, 5-oxo-6,8-octadecadienoic acid, 6-oxo-9,12-octadecadienoic acid, 8-oxo-9,12-octadecadienoic acid, 10-oxo-8,12-octadecadienoic acid, 11-oxo-9,12-octadecadienoic acid, 12-oxo-9,13-octadecadienoic acid, and 14-oxo-9,12-octadecadienoic acid.

The hydroxy fatty acid is preferably represented by the following formula (III) and/or formula (IV):

HOOC-(R⁵)-CH(OH)-CH(OH)-CH=CH-CH(OH)-R⁶ (III)

HOOC-(R⁵)-CH(OH)-CH=CH-CH(OH)-CH(OH)-R⁶ (IV)

wherein
R⁵ is a linear or branched hydrocarbon group having 4 to 12 carbon atoms, which may contain one or more double bonds and/or OH groups, and, when R⁵ contains a double bond, the position of the double bond is not limited, and
R⁶ is a linear or branched hydrocarbon group having from 2 to 8 carbon atoms, which may contain one or more double bonds and/or OH groups, and, when R⁶ contains a double bond, the position of the double bond is not limited.

Preferably, in the hydroxy fatty acid, the hydrocarbon group of R⁵ has 6 to 8 carbon atoms, and the hydrocarbon group of R⁶ has 4 to 6 carbon atoms.

Preferably, in the hydroxy fatty acid, R⁵ is a structure of - (CH₂)ₙ- (wherein n is an integer of 4 to 12), and R⁶ is a structure of CₙH₂ₙ₊₁- (wherein n is an integer of 2 to 8).

Preferably, in the hydroxy fatty acid, R⁵ is an alkylene group having 7 carbon atoms (-(CH₂)₇-), and R⁶ is an alkyl group having 5 carbon atoms (CH₃CH₂CH₂CH₂CH₂-).

The hydroxy fatty acid is preferably hydroxyoctadecenoic acid.

The hydroxy fatty acid is preferably 9,10,13-trihydroxy-11-octadecenoic acid or 9,12,13-trihydroxy-10-octadecenoic acid.

A content proportion of the at least one compound selected from an oxo fatty acid, or a derivative thereof or a salt thereof, and a hydroxy fatty acid, or a derivative thereof or a salt thereof to the entire penetration promoter is preferably 0.01 × 10⁻⁴ to 100 × 10⁻⁴ parts by weight relative to 100 parts by weight of the penetration promoter.

The penetration promoter of the present invention may contain at least one compound selected from an oxo fatty acid or a derivative thereof or a salt thereof, and at least one compound selected from a hydroxy fatty acid or a derivative thereof or a salt thereof. Due to the penetration promoter containing both kinds of compounds, i.e., oxo fatty acid and hydroxy fatty acid, the effect of promoting penetration of the organic substance for plants into the plant as a penetration promoter may be further improved.

When the penetration promoter of the present invention contains both kinds of compounds, i.e., oxo fatty acid and hydroxy fatty acid, a weight ratio of the compound composed of the oxo fatty acid or derivative thereof or salt thereof to the compound composed of the hydroxy fatty acid or derivative thereof or salt thereof is desirably 5 to 100 for the compound composed of the hydroxy fatty acid or derivative thereof or salt thereof relative to 100 for the compound composed of the oxo fatty acid or derivative thereof or salt thereof. This is because, when the content of the compound composed of the hydroxy fatty acid or derivative thereof or salt thereof is more than 100 in a weight ratio, the penetrability of the organic substance for plants may be reduced.

The present invention also relates to a method of enhancing immunity, health, growth and/or yield of a plant by applying the penetration promoter of the present invention, wherein the penetration promoter is applied to the plant by atomizing.

The present invention relates to an agricultural composition containing:
(a) at least one compound selected from an oxo fatty acid, or a derivative thereof or a salt thereof, and a hydroxy fatty acid, or a derivative thereof or a salt thereof; and
(b) at least one organic substance for plants.

Both the oxo fatty acid and the hydroxy fatty acid are desirably unsaturated fatty acids. In addition, in the case of an unsaturated oxo fatty acid, the number of carbon atoms is desirably 4 or more because it is more stably present when double bonds in a carbonyl group and the oxo fatty acid are conjugated. In addition, in the case of an unsaturated hydroxy fatty acid, the number of carbon atoms is desirably 4 or more because it is more stable when a hydroxy group is not bonded to carbon atoms bonded to each other by a double bond.

The agricultural composition wherein the at least one compound selected from an oxo fatty acid, or a derivative thereof or a salt thereof, and a hydroxy fatty acid, or a derivative thereof or a salt thereof is preferably contained in an amount of 0.01 × 10⁻⁴ to 100 × 10⁻⁴ parts by weight relative to 100 parts by weight of the agricultural composition is preferred.

The agricultural composition wherein a proportion of the organic substance for plants to the at least one compound selected from an oxo fatty acid, or a derivative thereof or a salt thereof, and a hydroxy fatty acid, or a derivative thereof or a salt thereof is preferably 0.1 × 10⁵ to 500 × 10⁵ in a weight ratio is preferred. For example, examples of the organic substance for plants contained in the agricultural composition of the present invention may include a terpene, a nucleic acid, an amino acid, and a phospholipid which will be described later. For example, the proportion of the terpene is 1%, the proportion of the amino acid is 9%, the proportion of the nucleic acid is 22.5%, and the proportion of the phospholipid is 5%, relative to 0.2 ppm (2 × 10⁻⁵%) of the oxo fatty acid and 0.05 ppm (0.5 × 10⁻⁵%) of the hydroxy fatty acid.

The agricultural composition of the present invention may contain at least one compound selected from an oxo fatty acid or a derivative thereof or a salt thereof, and at least one compound selected from a hydroxy fatty acid or a derivative thereof or a salt thereof. Due to the agricultural composition containing both kinds of compounds, i.e., oxo fatty acid and hydroxy fatty acid, the penetration of the organic substance for plants, which is contained in the agricultural composition, into the plant may be further improved.

When the agricultural composition of the present invention contains both kinds of compounds, i.e., oxo fatty acid and hydroxy fatty acid, a weight ratio of the compound composed of the oxo fatty acid or derivative thereof or salt thereof to the compound composed of the hydroxy fatty acid or derivative thereof or salt thereof is desirably 5 to 100 for the compound composed of the hydroxy fatty acid or derivative thereof or salt thereof relative to 100 for the compound composed of the oxo fatty acid or derivative thereof or salt thereof. This is because, when the content of the compound composed of the hydroxy fatty acid or derivative thereof or salt thereof is more than 100 in a weight ratio, the penetrability of the organic substance for plants is reduced.

The agricultural composition wherein the organic substance for plants is preferably a plant hormone or a precursor in biosynthesis of the plant hormone is preferred.

The agricultural composition wherein the organic substance for plants is preferably at least one selected from the group consisting of an agrochemical, a plant growth promoter, a growth stimulant, an organic elicitor, and a functional nutrient, or a precursor thereof is preferred.

The agricultural composition wherein the organic substance for plants is preferably at least one selected from the group consisting of a terpene, a nucleic acid, an amino acid, and a phospholipid is preferred.

The agricultural composition is preferred wherein the oxo fatty acid is preferably an oxo fatty acid represented by the following formula (I):

HOOC-(R¹)-CH=CH-C(=O)-R² (I)

wherein
R¹ represents a linear or branched, saturated or unsaturated hydrocarbon group containing 6 to 12 carbon atoms, R² represents an alkyl group having 2 to 8 carbon atoms which may contain one or more branches and/or double bonds,
or the following formula (II):

   HOOC-(R³)-C(=O)-CH=CH-R⁴ (II)

   wherein
   R³ represents a linear or branched, saturated or unsaturated hydrocarbon group containing 3 to 10 carbon atoms, and R⁴ represents a hydrocarbon group having 4 to 11 carbon atoms which may contain one or more branches and/or double bonds.

The agricultural composition wherein, in the formula (I), R¹ contains a double bond forming a conjugated double bond with a double bond between α carbon and β carbon of a carbonyl group in the formula (I), and, in the formula (II), R⁴ contains a double bond forming a conjugated double bond with a double bond between α carbon and β carbon of a carbonyl group in the formula (II) is preferred.

The agricultural composition wherein the oxo fatty acid represented by the formula (I) and the oxo fatty acid represented by the formula (II) are ketooctadecadienoic acids is preferred.

The agricultural composition wherein, in the formula (I), R¹ is a linear or branched hydrocarbon group having 9 carbon atoms, and R² is an alkyl group having 5 carbon atoms, and, in the formula (II), R³ is a linear or branched hydrocarbon group having 7 carbon atoms, and R⁴ has a structure of CH₃-CH₂-CH₂-CH₂-CH₂-CH=CH- having 7 carbon atoms is preferred.

The agricultural composition wherein the oxo fatty acid is at least one selected from the group consisting of 9-oxo-10,12-octadecadienoic acid, 13-oxo-9,11-octadecadienoic acid, 5-oxo-6,8-octadecadienoic acid, 6-oxo-9,12-octadecadienoic acid, 8-oxo-9,12-octadecadienoic acid, 10-oxo-8,12-octadecadienoic acid, 11-oxo-9,12-octadecadienoic acid, 12-oxo-9,13-octadecadienoic acid, and 14-oxo-9,12-octadecadienoic acid is preferred.

The agricultural composition wherein the oxo fatty acid represented by the formula (I) is 13-oxo-9,11-octadecadienoic acid, and the oxo fatty acid represented by the formula (II) is 9-oxo-10,12-octadecadienoic acid is preferred.

The agricultural composition is preferred wherein the hydroxy fatty acid is represented by the following formula (III) and/or formula (IV):

HOOC-(R⁵)-CH(OH)-CH(OH)-CH=CH-CH(OH)-R⁶ (III)

HOOC-(R⁵)-CH(OH)-CH=CH-CH(OH)-CH(OH)-R⁶ (IV)

wherein
R⁵ is a linear or branched hydrocarbon group having 4 to 12 carbon atoms, which may contain one or more double bonds and/or OH groups, and, when R⁵ contains a double bond, the position of the double bond is not limited, and
R⁶ is a linear or branched hydrocarbon group having from 2 to 8 carbon atoms, which may contain one or more double bonds and/or OH groups, and, when R⁶ contains a double bond, the position of the double bond is not limited.

The agricultural composition wherein, in the hydroxy fatty acid, the hydrocarbon group of R⁵ has 6 to 8 carbon atoms, and the hydrocarbon group of R⁶ has 4 to 6 carbon atoms is preferred.

The agricultural composition wherein, in the hydroxy fatty acid, R⁵ is a structure of -(CH₂)ₙ- (wherein n is an integer of 4 to 12), and R⁶ is a structure of CₙH₂ₙ₊₁- (wherein n is an integer of 2 to 8) is preferred.

The agricultural composition wherein, in the hydroxy fatty acid,
R⁵ is an alkylene group having 7 carbon atoms (-(CH₂)₇-), and
R⁶ is an alkyl group having 5 carbon atoms (CH₃CH₂CH₂CH₂CH₂-) is preferred.

The agricultural composition wherein the hydroxy fatty acid is hydroxyoctadecenoic acid is preferred.

The agricultural composition wherein the hydroxy fatty acid is 9,10,13-trihydroxy-11-octadecenoic acid or 9,12,13-trihydroxy-10-octadecenoic acid is preferred.

The present invention also relates to use of the agricultural composition for applying an organic substance for plants, which is contained therein, to a plant.

The present invention relates to use of the agricultural composition for improving penetrability of the organic substance for plants into the plant.

The present invention relates to use of the agricultural composition for spray that is brought into contact with a stem and a leaf.

The structural formula of the "9,10,13-trihydroxy-11-octadecenoic acid" is represented by the following structural formula (1).

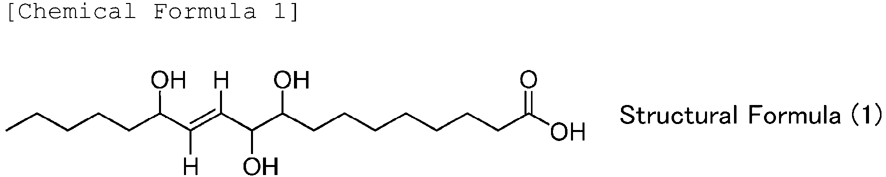

Similarly, the structural formula of the "9,12,13-trihydroxy-10-octadecenoic acid" is represented by the following structural formula (2).

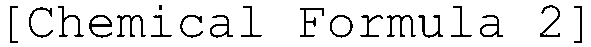

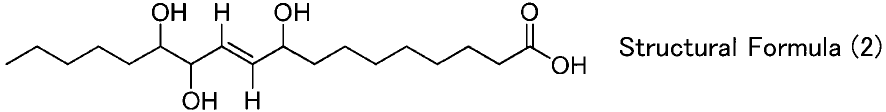

### ADVANTAGEOUS EFFECTS OF INVENTION

The penetration promoter of the present invention can significantly promote the penetration of an organic substance having a useful effect on plants into a plant internal structure and/or the uptake of the organic substance having a useful effect on plants by a plant, without causing problems related to soil contamination and toxicity. In addition, the agricultural composition containing the penetration promoter of the present invention satisfactorily increases the penetrability of an organic substance having a useful effect on plants, which is contained in the agricultural composition, into a plant and the uptake thereof by the plant.

### BRIEF DESCRIPTION OF DRAWINGS

Fig. 1 is a diagram showing analysis results of an amount of a terpene penetrated in rice.
Fig. 2 is a diagram showing analysis results of an amount of an amino acid penetrated in rice.
Fig. 3 is a diagram showing analysis results of an amount of a nucleic acid penetrated in rice.
Fig. 4 is a diagram showing analysis results of an amount of a phospholipid penetrated in rice.
Fig. 5 is a diagram showing analysis results of an amount of a terpene penetrated in soybean.
Fig. 6 is a diagram showing analysis results of an amount of an amino acid penetrated in soybean.
Fig. 7 is a diagram showing analysis results of an amount of a nucleic acid penetrated in soybean.
Fig. 8 is a diagram showing analysis results of an amount of a phospholipid penetrated in soybean.
Fig. 9 is a diagram showing analysis results of an amount of a terpene penetrated in leaf lettuce.
Fig. 10 is a diagram showing analysis results of an amount of an amino acid penetrated in leaf lettuce.
Fig. 11 is a diagram showing analysis results of an amount of a nucleic acid penetrated in leaf lettuce.
Fig. 12 is a diagram showing analysis results of an amount of a phospholipid penetrated in leaf lettuce.

### DESCRIPTION OF EMBODIMENTS

The penetration promoter of the present invention is a penetration promoter for an organic substance for plants, containing at least one compound selected from an oxo fatty acid, or a derivative thereof or a salt thereof, and a hydroxy fatty acid, or a derivative thereof or a salt thereof.

In the present invention, the term "plant" may mean an entire plant, a plant organ (for example, a leaf, a branch, a trunk, a root, a fine root, a shoot, a fruit, etc.), or a plant cell, and particularly means a plant organ such as a leaf. As used herein, the "plant" includes dry field crops, vegetable crops, and fruits.

The penetration promoter of the present invention contains at least one compound selected from an oxo fatty acid, or a derivative thereof or a salt thereof, and a hydroxy fatty acid, or a derivative thereof or a salt thereof, and, when applied to a plant, can enhance the penetrability of an organic substance having a useful effect on plants into the plant. As a result, the uptake amount of the organic substance for plants in the plant increases, and the useful effect of the organic substance in the plant to which the penetration promoter is applied can be increased.

The agricultural composition of the present invention is an agricultural composition containing:
(a) at least one compound selected from an oxo fatty acid, or a derivative thereof or a salt thereof, and a hydroxy fatty acid, or a derivative thereof or a salt thereof; and
(b) at least one organic substance for plants.

The "organic substance for plants" of the present invention is not particularly limited, and is a compound which is agriculturally active for plants or a precursor thereof. For example, it may be a compound having effects such as stimulation of growth of plants, stimulation of systemic acquired resistance and induced systemic resistance of plants, stimulation of symbiotic microorganisms, and weed suppression, or a precursor in biosynthesis of these compounds. For example, the organic substance for plants may be a compound known to exhibit any agrochemical or bactericidal activity for plants, a herbicide, a plant growth regulator, i.e., a substance for improving health, growth and/or yield of plants, a substance for improving an immune response of plants, or a precursor in biosynthesis thereof. Preferably, the organic substance for plants may be an agrochemical, a plant growth promoter, a plant growth stimulant, an organic elicitor or functional nutrient, or a combination thereof, or a precursor thereof. The agrochemical may be a mixture of two or more chemicals selected from insecticides, acaricides, nematicides, bactericides, virus inactivators (including antiviral agents), rodenticides, plant growth regulators, repellents, herbicides or attractants, or agents having these functions. As the agrochemical, Imidacloprid, Acetamiprid, Nitenpyram, Thiacloprid, Thiamethoxam, Clothianidin, Dionotefran, or the like can be used. The organic substance for plants may be an organic fertilizer.

In one embodiment, the organic substance for plants is a plant hormone or a precursor in biosynthesis of the plant hormone. Examples of the plant hormone include plant hormones having physiological actions such as promotion of plant growth, root elongation, promotion of fruiting, increase in yield of grains, promotion of flower bud formation, promotion of ovary growth (enlargement), and improvement in podding rate. Organic compounds having similar activities are also included. For example, such organic compounds may be auxins, gibberellins, cytokinins, abscisic acids, brassinosteroids, and the like, or precursors thereof. Examples of the precursor include terpenes, amino acids, and nucleic acids.

In addition, the organic substance for plants may be a substance involved in metabolism, and specific examples thereof include phospholipids.

The penetration promoter of the present invention can enhance the uptake of the organic substance as described above in a plant. In addition, the use of the agricultural composition of the present invention increases delivery of the organic substance contained in the agricultural composition into a plant tissue, so that an agricultural composition having high biological activity can be provided.

When the organic substance for plants is applied to the foliage or the like of a plant, its biological activity can be influenced by the ability of the organic substance to penetrate the wax-cuticle layer of surfaces of the plants and the mobility of the organic substance to penetrate into an intralobar tissue via the multi-layer barrier of leaves. The at least one compound selected from an oxo fatty acid, or a derivative thereof or a salt thereof, and a hydroxy fatty acid, or a derivative thereof or a salt thereof according to the present invention can promote penetration and permeation of the organic substance into the wax-cuticle layer. Therefore, it is presumed that the at least one compound selected from an oxo fatty acid, or a derivative thereof or a salt thereof, and a hydroxy fatty acid, or a derivative thereof or a salt thereof according to the present invention has a water droplet moisture-spreading action of expanding droplets of a spray liquid attached to plants to increase a contact area, and a cuticle membrane activation action of promoting a diffusion rate in the cuticle membrane by penetration into the cuticle membrane, similarly to the actions of a conventional surfactant as an adjuvant.

The agricultural composition of the present invention contains the at least one compound selected from an oxo fatty acid, or a derivative thereof or a salt thereof, and a hydroxy fatty acid, or a derivative thereof or a salt thereof, which have an effect of promoting penetration and permeation of the organic substance into the wax-cuticle layer described above, and can remarkably enhance the effectiveness of the organic substance for plants contained therein. It is considered that an improved efficacy can be achieved with a smaller application amount of the agricultural composition, as compared with that of a prior art agricultural composition containing a similar organic substance.

The oxo fatty acid of the present invention is desirably an unsaturated fatty acid. In the case of an unsaturated oxo fatty acid, the unsaturated oxo fatty acid of the present invention desirably has 4 or more carbon atoms because it can be more stably present as a compound when double bonds in a carbonyl group and the oxo fatty acid are conjugated.

The oxo fatty acid or derivative thereof or salt thereof used in the present invention can be suitably at least one selected from an oxo fatty acid represented by the following formula (I):

HOOC-(R¹)-CH=CH-C(=O)-R² (I)

wherein
R¹ represents a linear or branched, saturated or unsaturated hydrocarbon group containing 6 to 12 carbon atoms, and R² represents an alkyl group having 2 to 8 carbon atoms which may contain one or more branches and/or double bonds,
or the following formula (II):

   HOOC-(R³)-C(=O)-CH=CH-R⁴ (II)

   wherein
   R³ represents a linear or branched, saturated or unsaturated hydrocarbon group containing 3 to 10 carbon atoms, and R⁴ represents a hydrocarbon group having 4 to 11 carbon atoms which may contain one or more branches and/or double bonds,
   or a derivative thereof or a salt thereof.

The oxo fatty acid and the compound represented by the formula (I) or (II) include all geometric isomers and stereoisomers thereof having the same structural formula. As used herein, the term "stereoisomer" may refer to any of various stereoisomeric configurations that may be present in the compound of the present disclosure. For example, the compound represented by the formula (I) or (II) of the present disclosure contains a double bond, where a substituent may be in the E or Z configuration.

In one embodiment of the present invention, R¹ of the formula (I) above may contain a double bond forming a conjugated double bond with a double bond between α and β carbons of a carbonyl group in the formula (I). Also, R⁴ of the formula (II) above may contain a double bond forming a conjugated double bond with a double bond between α and β carbons of a carbonyl group in the formula (II).

For example, suitable examples of the oxo fatty acid used in the present invention include ketooctadecadienoic acids. Preferably, in the formula (I), R¹ may be a linear or branched hydrocarbon group having 9 carbon atoms, and R² may be an alkyl group having 5 carbon atoms. In the formula (II), R³ may be a linear or branched hydrocarbon group having 7 carbon atoms, and R⁴ preferably has a structure of CH₃-CH₂-CH₂-CH₂-CH₂-CH=CH- in the case of 7 carbon atoms.

Specific examples of the ketooctadecadienoic acid include 9-oxo-10,12-octadecadienoic acid (9-oxoODA), 13-oxo-9,11-octadecadienoic acid (13-oxoODA), 5-oxo-6,8-octadecadienoic acid, 6-oxo-9,12-octadecadienoic acid, 8-oxo-9,12-octadecadienoic acid, 10-oxo-8,12-octadecadienoic acid, 11-oxo-9,12-octadecadienoic acid, 12-oxo-9,13-octadecadienoic acid, and 14-oxo-9,12-octadecadienoic acid is preferred. For example, the oxo fatty acid of the present invention may be 13-oxo-9,11-octadecadienoic acid or 9-oxo-10,12-octadecadienoic acid.

The oxo fatty acid or derivative thereof or salt thereof of the present invention may contain two or more oxo fatty acids or derivatives thereof or salts thereof. For example, the two oxo fatty acids may be a combination of at least one oxo fatty acid represented by the formula (I) above and at least one oxo fatty acid represented by the formula (II) above.

The derivative of the oxo fatty acid of the present invention is desirably an ester. Examples of the ester of the oxo fatty acid of the present invention include, but are not limited to, a methyl ester, an ethyl ester, a propyl ester, a butyl ester, a pentyl ester, an isopentyl ester, and an octyl ester.

The salt of the oxo fatty acid is not particularly limited as long as it is one or more salts that are agriculturally acceptable, such as alkali metal salts such as sodium salts and potassium salts, and ammonium salts such as alkyl ammonium salts such as tetramethyl ammonium salts.

The oxo fatty acid or derivative thereof or salt thereof used in the present invention is not particularly limited in terms of its origin or the like. The oxo fatty acid such as ketooctadecadienoic acid or derivative thereof or salt thereof of the present invention may be obtained, for example, by chemical synthesis, or may be, for example, produced by using a microorganism or obtained by allowing an enzyme derived from a microorganism to act on a substrate such as a fatty acid. The penetration promoter and/or the agricultural composition of the present invention have/has only to contain at least one compound selected from an oxo fatty acid, or a derivative thereof or a salt thereof, and a hydroxy fatty acid, or a derivative thereof or a salt thereof at a desired concentration. For example, when an oxo fatty acid produced by using a microorganism is used as the oxo fatty acid, a mixture containing the oxo fatty acid may be used.

The hydroxy fatty acid of the present invention is desirably an unsaturated fatty acid. In the case of an unsaturated hydroxy fatty acid, the unsaturated hydroxy fatty acid of the present invention desirably has 4 or more carbon atoms because it can be more stably present as a compound when a hydroxy group is not bonded to carbon atoms bonded to each other by a double bond.

The hydroxy fatty acid or derivative thereof or salt thereof used in the present invention can be suitably a hydroxy fatty acid having the following structural formula (III) and/or formula (IV):

HOOC-(R⁵)-CH(OH)-CH(OH)-CH=CH-CH(OH)-R⁶ (III)

HOOC-(R⁵)-CH(OH)-CH=CH-CH(OH)-CH(OH)-R⁶ (IV)

wherein
R⁵ is a linear or branched hydrocarbon group having 4 to 12 carbon atoms, which may contain one or more double bonds and/or OH groups, and, when R⁵ contains a double bond, the position of the double bond is not limited, and
R⁶ is a linear or branched hydrocarbon group having from 2 to 8 carbon atoms, which may contain one or more double bonds and/or OH groups, and, when R⁶ contains a double bond, the position of the double bond is not limited,
or a derivative thereof or a salt thereof.

In one embodiment of the present invention, in the hydroxy fatty acid, the hydrocarbon group of R⁵ has 6 to 8 carbon atoms, and the hydrocarbon group of R⁶ has 4 to 6 carbon atoms. In another embodiment, in the hydroxy fatty acid, R⁵ is a structure of -(CH₂)ₙ-(wherein n is an integer of 4 to 12), and R⁶ is a structure of CₙH₂ₙ₊₁- (wherein n is an integer of 2 to 8). In still another embodiment, preferably, in the hydroxy fatty acid, R⁵ is an alkylene group having 7 carbon atoms (-(CH₂)₇-), and R⁶ is an alkyl group having 5 carbon atoms (CH₃CH₂CH₂CH₂CH₂-).

Specific examples of the hydroxy fatty acid of the present invention include hydroxyoctadecenoic acids. Examples of the hydroxyoctadecenoic acid include, but are not limited to, 9,10,13-trihydroxy-11-octadecenoic acid and/or 9,12,13-trihydroxy-10-octadecenoic acid, and isomers thereof.

The derivative of the hydroxy fatty acid of the present invention is desirably an ester. Examples of the ester of the hydroxy fatty acid of the present invention include, but are not limited to, a methyl ester, an ethyl ester, a propyl ester, a butyl ester, a pentyl ester, an isopentyl ester, and an octyl ester. Examples of a salt of the hydroxy fatty acid include ammonium salts such as alkyl ammonium salts such as ammonium salts and tetramethyl ammonium salts; alkaline earth metal salts such as calcium salts and magnesium salts; alkali metal salts such as sodium salts, lithium salts and potassium salts; and metal salts such as cobalt salts and manganese salts, but are not particularly limited as long as the salt is one or more salts that are agriculturally acceptable, such as salts contained in fertilizers and the like.

When an isomer is present in at least one compound selected from the hydroxy fatty acids or derivatives thereof or salts thereof exemplified in the present specification, all isomers that can be present can be used in the present invention unless otherwise specified.

As described above, the penetration promoter and agricultural composition of the present invention contain at least one compound selected from an oxo fatty acid, or a derivative thereof or a salt thereof, and a hydroxy fatty acid, or a derivative thereof or a salt thereof. Since these oxo fatty acids and hydroxy fatty acids can also be naturally present, the penetration promoter and agricultural composition of the present invention are also very excellent in terms of a low environmental load.

The organic substance for plants is, for example, at least one selected from the group consisting of a terpene, a nucleic acid, an amino acid, and a phospholipid.

The terpene is a precursor in biosynthesis of gibberellins, which are phytohormones with physiological actions of increasing the yield of grains, promoting flower bud formation, and promoting ovary growth.

As the terpene, any terpene can be suitably utilized, but monoterpene, sesquiterpene, diterpene and derivatives thereof are preferred. In particular, as a preferable example, a monoterpene such as α-pinene, β-pinene, silvestrene, or limonene is a core substance of a plant hormone, which is desirable. Further, the terpene may include terpineol. The terpineol includes α-terpineol, β-terpineol, and γ-terpineol as isomers thereof, and is more preferably α-terpineol. However, for example, terpineol that is usually commercially available may be a mixture of β-terpineol and γ-terpineol with α-terpineol as a main component. That is, a mixture of isomers can be used as it is, as long as it mainly contains α-terpineol. Pine oil containing α-pinene as a main component and the like can be suitably used in the present invention.

The nucleic acid is a precursor in biosynthesis of various plant hormones such as cytokinins. The application of the nucleic acid can increase the biosynthesis of plant hormones in the plants. The cytokinin is a plant hormone that promotes cell division in a plant and has physiological actions such as greening of leaves, promotion of plant growth, suppression of flower falling/pod shedding, promotion of pod elongation, and increase in weight and/or number of grains per individual.

As used herein, the term "nucleic acid" means at least one selected from a nucleobase, a nucleoside, a ribonucleotide, and a deoxyribonucleotide.

The nucleic acid of the present invention is not particularly limited, and may be appropriately selected from five common nucleobases, i.e. adenine, guanine, thymine, cytosine, and uracil; five nucleosides, i.e. adenosine, guanosine, thymidine, cytidine, and uridine; ribonucleosides of these five nucleosides; 15 ribonucleotides in which 1 to 3 phosphates are ester-bonded to the five ribonucleosides (AMP (adenosine monophosphate), ADP (adenosine diphosphate), ATP (adenosine triphosphate), GMP (guanosine monophosphate), GDP (guanosine diphosphate), GTP (guanosine triphosphate), TMP (thymidylate/thymidine-phosphate), TDP (thymidine diphosphate), TTP (thymidine triphosphate), CMP (cytidine monophosphate), CDP (cytidine diphosphate), CTP (cytidine triphosphate), UMP (uridine monophosphate), UDP (uridine diphosphate), UTP (uridine triphosphate); 15 deoxyribonucleotides in which a hydroxyl group at position 2 of ribose of these ribonucleotides is substituted with hydrogen (dAMP, dADP, dATP, dGMP, dGDP, dGTP, dTMP, dTDP, dTTP, dCMP, dCDP, dCTP, dUMP, dUDP, and dUTP), modified bases such as 5-methyluridine (m⁵U), or the like, or may be a mixture of two or more thereof.

The amino acid is an important nitrogen source in a plant and is a building block of a protein that exhibits diverse functions in plant metabolism. The amino acid is be used as metabolites and precursors involved in biosynthesis of various enzymes and plant hormones, as well as as precursors for various secondary compounds.

The amino acid used in the present invention is not particularly limited, and may be appropriately selected from isoleucine, leucine, lysine, methionine, phenylalanine, threonine, tryptophan, valine, histidine, tyrosine, cysteine, aspartic acid, asparagine, serine, glutamic acid, glutamine, proline, glycine, alanine, and arginine, or may be a mixture of two or more thereof.

The phospholipid has, for example, an effect of enhancing cell membrane repair. The phospholipid used in the present invention may be a naturally occurring phospholipid or a synthetic phospholipid. Examples of the naturally occurring phospholipid include soybean lecithin, egg lecithin, hydrogenated soybean lecithin, hydrogenated egg lecithin, sphingosine, ganglioside, and phytosphingosine, and a mixture of two or more thereof may be used. Examples of the synthetic phospholipid include diacylglycerol, phosphatidic acid, phosphocholine, phosphoethanolamine, phosphoglycerol, phosphoserine, mixed chain phospholipids, lysophospholipids, and pegylated phospholipids, and a mixture of two or more of these may be used.

In the present invention, a content proportion of the at least one compound selected from an oxo fatty acid, or a derivative thereof or a salt thereof, and a hydroxy fatty acid, or a derivative thereof or a salt thereof is preferably about 0.01 × 10⁻⁴ to 100 × 10⁻⁴ parts by weight relative to 100 parts by weight of the penetration promoter or agricultural composition of the present invention.

In the agricultural composition of the present invention, a proportion of the organic substance for plants to the at least one compound selected from an oxo fatty acid, or a derivative thereof or a salt thereof, and a hydroxy fatty acid, or a derivative thereof or a salt thereof is preferably 0.1 × 10⁵ to 500 × 10⁵ in a weight ratio. For example, in the agricultural composition of the present invention, the proportion of the terpene may be 1%, the proportion of the amino acid may be 9%, the proportion of the nucleic acid may be 22.5%, and the proportion of the phospholipid may be 5%, relative to 0.2 ppm (2 × 10⁻⁵%) of the oxo fatty acid and 0.05 ppm (0.5 × 10⁻⁵%) of the hydroxy fatty acid. The proportions set to such levels make it possible to effectively promote the penetration of the organic substance for plants which are contained in the agricultural composition into the plant tissue.

In one embodiment, the penetration promoter and agricultural composition of the present invention may contain at least one compound selected from an oxo fatty acid or a derivative thereof or a salt thereof, and at least one compound selected from a hydroxy fatty acid or a derivative thereof or a salt thereof. Due to the penetration promoter and agricultural composition containing both kinds of compounds, i.e., oxo fatty acid and hydroxy fatty acid, the penetrability of the organic substance for plants into the foliage of a plant may be further improved.

In the penetration promoter and agricultural composition in the present embodiment, a weight ratio of the compound composed of the oxo fatty acid or derivative thereof or salt thereof to the compound composed of the hydroxy fatty acid or derivative thereof or salt thereof is desirably 5 to 100 for the compound composed of the hydroxy fatty acid or derivative thereof or salt thereof relative to 100 for the compound composed of the oxo fatty acid or derivative thereof or salt thereof. This is because, when the content of the compound composed of the hydroxy fatty acid or derivative thereof or salt thereof is more than 100 in a weight ratio, the penetrability of the organic substance for plants may be reduced.

The penetration promoter and agricultural composition of the present invention may be provided as solids. Examples of the solid dosage form include a powder, a wettable powder, a water-soluble powder, a dusting powder, a flow dust, a crystal, a granule, an encapsulated granule, a fine granule, a microgranule, a microcapsule, a pellet, a tablet, and a flake. Alternatively, the penetration promoter and agricultural composition of the present invention may be provided as liquids. Examples of the liquid dosage form include a solution, a concentrated solution, an aqueous solution, a suspension, a microcapsule suspension, a paste, a slurry, a gel, and a liquid soluble gel. Preferably, the penetration promoter and agricultural composition of the present invention further contain a solvent and are formulated as a liquid. The solvent used is desirably water. This is because water has no toxicity to plants and does not contaminate soil. The penetration promoter and agricultural composition of the present invention may be provided in concentrated and/or diluted forms of the liquid dosage form. The penetration promoter and agricultural composition, in a concentrated form, may be appropriately diluted with a diluent before use. Preferably, the diluent is water.

An application amount of the agricultural composition of the present invention can vary within a wide range, depending on the properties of the particular organic substances for plants contained in the agricultural composition and amounts thereof in the agricultural composition. The content proportion of the organic substances for plants in the agricultural composition of the present invention may also be appropriately selected depending on the properties of the particular organic substances for plants contained in the agricultural composition, and so as to be suitable for an effective application amount of the organic substance for plants. It is considered that, when the application concentration of the at least one compound selected from an oxo fatty acid, or a derivative thereof or a salt thereof, and a hydroxy fatty acid, or a derivative thereof or a salt thereof of the present invention exceeds 10 mg/L, phytotoxicity for plants may occur. Therefore, the penetration promoter and/or agricultural composition of the present invention can be applied under conditions such that the concentration of the at least one compound selected from an oxo fatty acid, or a derivative thereof or a salt thereof, and a hydroxy fatty acid, or a derivative thereof or a salt thereof of the present invention is, for example, about 0.1 to 100 mg/L.

The present invention relates to a method of improving penetration of an organic substance for plants into a plant body tissue by using the penetration promoter of the present invention, and a method of improving uptake and/or absorption of an organic substance for plants by a plant body tissue.

The penetration promoter of the present invention may be used to enhance immunity, health, growth and/or yield of a plant. The present invention thus relates to a method of enhancing immunity, health, growth and/or yield of a plant by applying the penetration promoter of the present invention. The penetration promoter of the present invention can be applied to plants by any method, depending on the type and properties of the organic substance for plants whose uptake into a plant is to be promoted. For example, it can be used as a water dispersible powder used by being suspended in water, and, for example, may be used as a atomizing agent or an soaking agent to be brought into contact with the foliage or root of a plant. The specific application method can be appropriately selected depending on the cultivation plant to be applied and the use form, and examples thereof include surface treatments such as ground liquid agent spraying, aerial liquid agent spraying, liquid surface spraying, in-facility application, and coating treatment, seedling raising box application, single flower treatment, and plant foot treatment. For example, the penetration promoter of the present invention may be applied to plants by atomizing.

The agricultural composition of the present invention may further contain an agriculturally acceptable agent which is usually used in an agrochemical formulation and the like, if necessary. These agents are not particularly limited, and examples thereof include a diluent, a freeze-thaw stabilizer, a biocide, a preservative, a pigment, a dye, a colorant, a buffering agent or a pH adjusting agent or a neutralizing agent, a foam inhibitor or a defoaming agent, an ultraviolet absorber, an ultraviolet scattering agent, and a stabilizer. Such agents are commercially manufactured and available through various companies. It is to be noted that the "agriculturally acceptable agent" herein means an agent known and accepted in the art for the preparation of compositions for agricultural or horticultural use.

Various plants and plant portions can be effectively treated using the agricultural composition according to the present invention. The agricultural composition according to the present invention is capable of delivering the organic substance for plants into plants and/or to their habitats in a particularly advantageous manner. Thus, the present invention encompasses use of the agricultural composition of the present invention for applying an organic substance for plants, which is contained therein, to a plant. The use of the agricultural composition according to the present invention can provide an enhanced effect with a lower application amount of the organic substance for plants.

The present invention further relates to use of the agricultural composition of the present invention for improving penetrability of an organic substance for plants, which is contained therein, into a plant.

The treatment according to the present invention of plants and plant parts with the agricultural composition of the present invention can be performed according to customary treatment methods, for example, directly by soaking, spraying, atomizing or application, or by causing it to act on its surroundings, habitat environment or reservoirs, etc. In particular, the present invention relates to use of the agricultural composition according to the invention for foliage spraying.

### EXAMPLES

The present invention will be described with reference to Examples, but the present invention is not limited to the Examples only.

### • Preparation of penetration promoter solution

### [Example 1]

As a raw material containing a fatty acid, 580 g of linoleic acid having a purity of 90% (manufactured by NOF Corporation) was used, and 216 g of potassium carbonate (manufactured by FUJIFILM Wako Pure Chemical Corporation), 280 g of dipotassium hydrogen phosphate (manufactured by FUJIFILM Wako Pure Chemical Corporation), and 13000 mL of distilled water were added thereto to prepare a test solution. The pH of the test solution at this time was 9.0.

Forty (40) mg of lipoxygenase (manufactured by NACALAI TESQUE, INC., derived from soybean) was added to the test solution, and the mixture was reacted at 15°C for 3 hours while being aerated with oxygen and stirred, and then the reaction mixture was placed in a hot water bath at 90°C for 90 minutes. The obtained reaction liquid was designated as liquid A.

To 6500 mL of the liquid A, 35 mL of phosphoric acid (manufactured by FUJIFILM Wako Pure Chemical Corporation) was added to adjust the pH to 7.0. This liquid was reacted at 50°C for 22 hours while being aerated with oxygen and stirred, and then the reaction mixture was placed in a hot water bath at 90°C for 2 hours. The obtained reaction liquid was designated as liquid B.

The total amount of the liquid A and the total amount of the liquid B obtained above were mixed, and the obtained mixed liquid was quantified by an absolute calibration curve method by LC-MS (detection wavelength: oxo fatty acid: UV 272 nm, hydroxy fatty acid: 210 nm) through MS² spectrum analysis using 13 oxoODA (13-oxo-9,11-octadecadienoic acid) and 9-oxoODA (9-oxo-10,12-octadecadienoic acid) manufactured by Cayman Chemical Company and 9,10,13-trihydroxy-11-octadecenoic acid, and 9,12,13-trihydroxy-10-octadecenoic acid manufactured by Larodan Fine Chemicals AB as standard substances. Isomers such as (E,E form) and (E,Z form) were added up, and the solution contained 13-oxoODA at a concentration of 2540 ppm and 9-oxoODA at a concentration of 1147 ppm (that is, 9-oxoODA/13-oxoODA < 1). The total concentration of the hydroxy fatty acids 9,10,13-trihydroxy-11-octadecenoic acid and 9,12,13-trihydroxy-10-octadecenoic acid was 927 ppm.

A solution obtained by diluting 0.1 mL of the mixed liquid obtained above with ion-exchanged water to 2000 mL was designated as penetration promoter solution 1 (9-oxoODA/13-oxoODA < 1).

### [Example 2]

As a raw material containing a fatty acid, 580 g of linoleic acid having a purity of 90% (manufactured by NOF Corporation) was used, and 216 g of potassium carbonate (manufactured by FUJIFILM Wako Pure Chemical Corporation), 280 g of dipotassium hydrogen phosphate (manufactured by FUJIFILM Wako Pure Chemical Corporation), and 13000 mL of distilled water were added thereto to prepare a test solution. The pH of the test solution at this time was 9.0.

Forty (40) mg of lipoxygenase (manufactured by NACALAI TESQUE, INC., derived from soybean) was added to the test solution, and the mixture was reacted at 15°C for 3 hours while being stirred, and then the reaction mixture was placed in a hot water bath at 90°C for 90 minutes. To this, 35 mL of phosphoric acid (manufactured by FUJIFILM Wako Pure Chemical Corporation) was added to adjust the pH to 7.0. This solution was reacted at 50°C for 22 hours while being aerated with oxygen and stirred, and then the reaction mixture was placed in a hot water bath at 90°C for 2 hours.

When the obtained solution was quantified in the same manner as in Example 1, the solution contained 9-oxoODA at a concentration of 2911 ppm. The concentration of 13-oxoODA was 1472 ppm, and the total concentration of the hydroxy fatty acids 9,10,13-trihydroxy-11-octadecenoic acid and 9,12,13-trihydroxy-10-octadecenoic acid was 277 ppm.

A solution obtained by diluting 0.1 mL of this solution with ion-exchanged water to 2000 mL was designated as penetration promoter solution 2 (9-oxoODA).

### [Comparative Example 1]

As a control, ion-exchanged water was designated as penetration promoter solution 3.

### [Comparative Example 2]

In 130 mL of distilled water, dissolved were 2.16 g of potassium carbonate (manufactured by FUJIFILM Wako Pure Chemical Corporation) and 2.8 g of dipotassium hydrogen phosphate (manufactured by FUJIFILM Wako Pure Chemical Corporation). A solution obtained by diluting 0.2 mL of the obtained solution with ion-exchanged water to 2000 mL was designated as penetration promoter solution 4.

### [Comparative Example 3]

Using 2.16 g of potassium carbonate (manufactured by FUJIFILM Wako Pure Chemical Corporation) and 2.8 g of dipotassium hydrogen phosphate (manufactured by FUJIFILM Wako Pure Chemical Corporation), 5.8 g of linoleic acid having a purity of 90% (manufactured by NOF Corporation) was dispersed in 130 mL of distilled water. A solution obtained by diluting 0.2 mL of the obtained solution with ion-exchanged water to 2000 mL was designated as penetration promoter solution 5.

### [Comparative Example 4]

A solution obtained by dissolving 10 g of polyoxyethylene (18) nonylphenyl ether (manufactured by FUJIFILM Wako Pure Chemical Corporation) in 2000 mL of ion-exchanged water was designated as penetration promoter solution 6.

### [Comparative Example 5]

A solution obtained by dissolving 10 g of linear sodium dodecylbenzenesulfonate (manufactured by FUJIFILM Wako Pure Chemical Corporation) in 2000 mL of ion-exchanged water was designated as penetration promoter solution 7.

### [Comparative Example 6]

A solution obtained by dissolving 10 mL of polyoxyethylene (20) sorbitan monooleate (manufactured by FUJIFILM Wako Pure Chemical Corporation) in 2000 mL of ion-exchanged water was designated as penetration promoter solution 8.

### • Preparation of test penetrant

### A) For terpene penetration test

A solution obtained by adding 40 µL (20 mg) of pine oil (manufactured by ease Inc.) to 2000 mL of each of the penetration promoter solutions 1 to 8 was used as a terpene test penetrant.

Note that the terpene has an octanol/water partition coefficient of 4.16.

### B) For amino acid penetration test

A liquid obtained by dissolving 180 mg of a ground amino acid supplement (trade name: Multiple Amino acid, manufactured by FANCL Corporation (components: isoleucine, leucine, lysine, methionine, phenylalanine, threonine, tryptophan, valine, histidine, tyrosine, cysteine, aspartic acid, asparagine, serine, glutamic acid, glutamine, proline, glycine, alanine, and arginine)) in 2000 mL of each of the penetration promoter solutions 1 to 8 was used as an amino acid test penetrant.

Octanol/water partition coefficients of the various amino acids are as follows: isoleucine (-1.70), leucine (-1.52), lysine (-3.05), methionine (-1.87), phenylalanine (-1.38), threonine (-2.94), tryptophan (-1.05), valine (-2.26), histidine (-3.32), tyrosine (-2.26), cysteine (-2.49), aspartic acid (-3.89), asparagine (-3.82), serine (-3.07), glutamic acid (-3.69), glutamine (-3.64), proline (-2.54), glycine (-3.21), alanine (-2.85), and arginine (-4.20).

### C) For nucleic acid penetration test

A liquid obtained by dissolving 450 mg of ground nucleic acid particles (manufactured by Kenkououendan Inc.) in 2000 mL of each of the penetration promoter solutions 1 to 8 was used as a nucleic acid test penetrant.

The nucleic acid particles used were nucleic acids extracted from salmon milt (adenine, adenosine, adenosine monophosphate (AMP), guanine, guanosine, guanosine monophosphate (GMP), thymine, thymidine, thymidine monophosphate (TMP), 5-methyluridine, cytosine, cytidine, cytidine monophosphate (CMP), uracil, uridine, and uridine monophosphate (UMP): manufactured by Kenkououendan Inc.).

Octanol/water partition coefficients of the various nucleic acids are as follows: adenine (-0.1), adenosine (-1.2), adenosine monophosphate (AMP) (-3.1), guanine (-0.91), guanosine (-1.9), thymine (-0.62), thymidine (-0.93), thymidine monophosphate (TMP) (-2.8), cytosine (-1.73), cytidine (-2.51), uracil (-1.07), and uridine (-1.98).

### D) For phospholipid penetration test

A liquid obtained by dispersing 100 mg of soybean-derived lecithin (manufactured by FUJIFILM Wako Pure Chemical Corporation) in 2000 mL of each of the penetration promoter solutions 1 to 8 was used as a phospholipid test penetrant.

### • Penetrability test of each organic substance using test penetrant

### i) Test on penetrability in rice

Rice (variety: Nipponbare) seed paddies were soaked in water for 5 days in an artificial weather machine (LH-60FL3-DT: manufactured by Nippon Medical & Chemical Instruments Co., Ltd.) at a temperature of 15°C under lighting-off, and then the temperature was raised to 30°C for half a day. Four of the obtained pigeon-chested seed paddies were seeded per cell in a 72-hole cell tray containing sterilized Seeding Soil (manufactured by Takii Co., Ltd.). The seed paddies were grown in the artificial weather machine in a daily cycle: at a temperature of 28°C under a fluorescent lamp for 14 hours, and at a temperature of 23°C under lighting-off for 10 hours, until reaching the two-leaf stage.

Leaves uniform in size with a weight of 0.1 to 0.12 g were cut off from the stem, and soaked one by one in a 9 cm-φ petri dish containing 10 mL of each test penetrant except for 1 cm from the cut portion, and covered. After 10 minutes, 30 minutes, and 60 minutes, the leaves were taken out from the petri dish, washed with a large amount of ion-exchanged water, and then the surface was wiped with a Kimtowel to remove attached components and water. The penetrability test was performed with the number of samples N = 3 for each time in each test penetrant. The obtained leaves were immediately transferred into a freezer at -80°C and frozen for 24 hours.

A mixed liquid of ethanol: water: acetic acid = 80:20:1 was added to the frozen sample so as to attain a concentration of 1 mL of the mixed solution per 0.1 g of the sample. After the addition of the mixed liquid, the sample was crushed by beads, followed by sonication for 10 minutes. The treated sample was allowed to stand for 1 hour, and then centrifuged at 3000 rpm for 5 minutes with a centrifuge (himac CT6E: manufactured by Eppendorf Hymac Technologies Co., Ltd.). The resulting supernatant was filtered through a membrane filter to prepare an analytical sample.

### ii) Test on penetrability in soybean

Four soybean (variety: Fukuyutaka) seeds were seeded, per pot, in a No. 3 pot containing Seeding Soil for Vegetables and Flowers (manufactured by Takii Co., Ltd.). The seeds were grown in the artificial weather machine (LH-60FL3-DT :manufactured by Nippon Medical & Chemical Instruments Co., Ltd.) in a daily cycle: at a temperature of 25°C under a fluorescent lamp for 14 hours, and at a temperature of 20°C under lighting-off for 10 hours, for 20 days.

Of fresh leaves, leaves uniform in size with a weight of 0.27 to 0.30 g were cut off from the stem, placed one by one on a 9 cm-φ petri dish, and absorbent cotton cut into length × width × thickness =1.5 cm × 1.5 cm × 0.5 cm impregnated with 2 mL of each test penetrant was placed on the front side of the leaf, and the leaf was covered. After 10 minutes, 30 minutes, and 60 minutes, the leaves were taken out from the petri dish, washed with a large amount of ion-exchanged water, and then the surface was wiped with a Kimtowel to remove attached components and water. The penetrability test was performed with the number of samples N = 3 for each time in each test penetrant. The obtained leaves were immediately transferred into a freezer at -80°C and frozen for 24 hours.

A mixed liquid of ethanol: water: acetic acid = 80:20:1 was added to the frozen sample so as to attain a concentration of 1 mL of the mixed solution per 0.1 g of the sample. After the addition of the mixed liquid, the sample was crushed by beads, followed by sonication for 10 minutes. The treated sample was allowed to stand for 1 hour, and then centrifuged at 3000 rpm for 5 minutes with a centrifuge (himac CT6E: manufactured by Eppendorf Hymac Technologies Co., Ltd.). The resulting supernatant was filtered through a membrane filter to prepare an analytical sample.

### iii) Test on penetrability in leaf lettuce

Leaf lettuce (variety: Grand Rapids) seeds were seeded in a 200-hole seedling raising pit tray containing Seeding Soil for Vegetables and Flowers (manufactured by Takii Co., Ltd.). The seeds were germinated in the artificial weather machine (LH-60FL3-DT: manufactured by Nippon Medical & Chemical Instruments Co., Ltd.) in a daily cycle: at a temperature of 23°C under a fluorescent lamp for 14 hours, and at a temperature of 20°C under lighting-off for 10 hours. The seedlings were raised under the same conditions, and transplanted to a 6-cm pot at the time of two to three true leaves, and grown to the stage of four to five true leaves.

Of outer leaves, leaves uniform in size with a weight of 0.45 to 0.50 g were cut off from the stem, placed one by one on a 9 cm-φ petri dish, and absorbent cotton cut into length × width × thickness =1.5 cm × 1.5 cm × 0.5 cm impregnated with 2 mL of each test penetrant was placed on the front side of the leaf, and the leaf was covered. After 10 minutes, 30 minutes, and 60 minutes, the leaves were taken out, washed with a large amount of ion-exchanged water, and then the surface was wiped with a Kimtowel to remove attached components and water. The penetrability test was performed with the number of samples N = 3 for each time in each test penetrant. The obtained leaves were immediately transferred into a freezer at -80°C and frozen for 24 hours.

A mixed liquid of ethanol: water: acetic acid = 80:20:1 was added to the frozen sample so as to attain a concentration of 1 mL of the mixed solution per 0.1 g of the sample. After the addition of the mixed liquid, the sample was crushed by beads, followed by sonication for 10 minutes. The treated sample was allowed to stand for 1 hour, and then centrifuged at 3000 rpm for 5 minutes with a centrifuge (himac CT6E: manufactured by Eppendorf Hymac Technologies Co., Ltd.). The resulting supernatant was filtered through a membrane filter to prepare an analytical sample.

### • Analysis of amount of each organic substance penetrated

### A) Analysis of amount of terpene penetrated

The analysis sample was analyzed for the amount of terpene using an LC-MS/MS apparatus (LC part: DIONEX Ultimate3000, MS/MS part: Q Exactive Focus: manufactured by Thermo Fisher Scientific K.K.) under the following conditions. Column = Aclaim PR-MS 2.1 mm φ × 150 mm (manufactured by Thermo Fisher Scientific K.K.), solvent = 60% acetonitrile/acetic acid water →95% acetonitrile/acetic acid water, flow rate = 0.25 mL/min., column temperature = 40°C, detection = MS-(SIM), introduction = 2 µL of sample liquid. Quantification was performed from the MS- peak area value of α-pinene contained in pine oil (manufactured by ease Inc.), and the amounts of terpene penetrated into the intralobar tissue by the penetration promoter solutions 1 to 8 (Examples 1 and 2 and Comparative Examples 1 to 6) were compared.

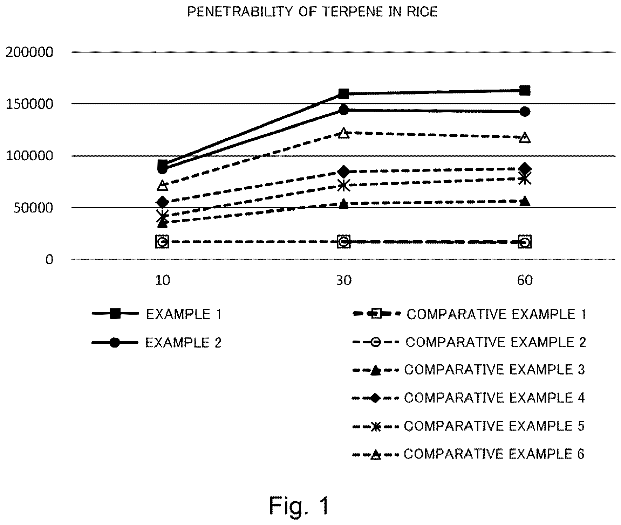

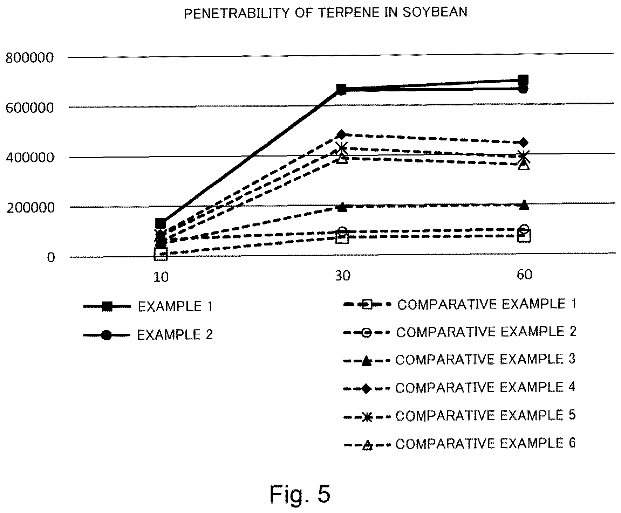

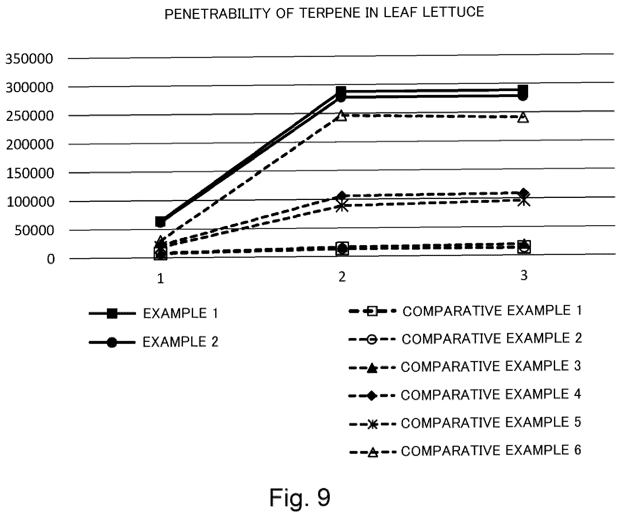

The results in rice are shown in Fig. 1, the results in soybean are shown in Fig. 5, and the results in leaf lettuce are shown in Fig. 9.

### B) Analysis of amount of amino acid penetrated

The analysis sample was analyzed for the amount of amino acid using an LC-MS/MS apparatus (LC part: DIONEX Ultimate3000, MS/MS part: Q Exactive Focus: manufactured by Thermo Fisher Scientific K.K.) under the following conditions. Column = Aclaim PR-MS 2.1 mm φ × 150 mm (manufactured by Thermo Fisher Scientific K.K.), solvent = 0% acetonitrile/acetic acid water →30% acetonitrile/acetic acid water, flow rate = 0.25 mL/min., column temperature = 40°C, detection = MS-(SIM), introduction = 2 µL of sample liquid. Quantification was performed from the MS- peak area value of valine, which is the slowest in plant metabolism among the amino acids contained in the amino acid supplement (trade name: Multiple Amino acid, manufactured by FANCL Corporation), and the amounts of amino acid penetrated into the intralobar tissue by the penetration promoter solutions 1 to 8 (Examples 1 and 2 and Comparative Examples 1 to 6) were compared. Since the amino acids were originally contained in the leaf, the evaluation was performed while the average value of the amino acid amount analysis values of five untreated leaves was subtracted.

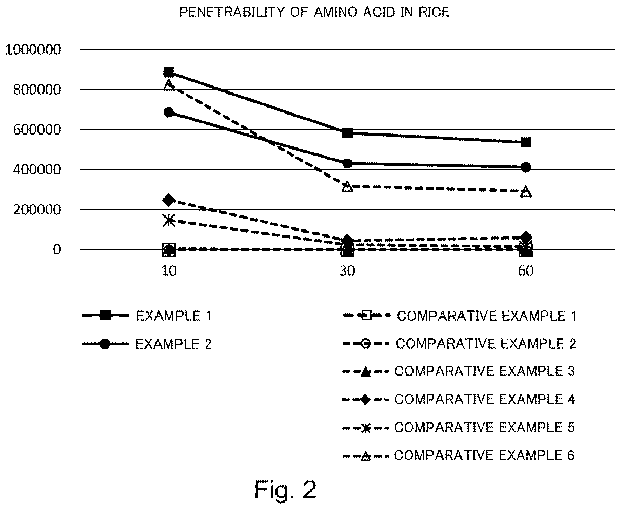

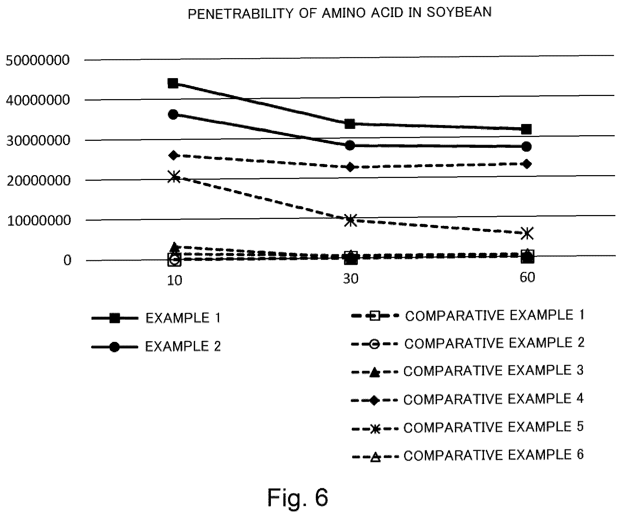

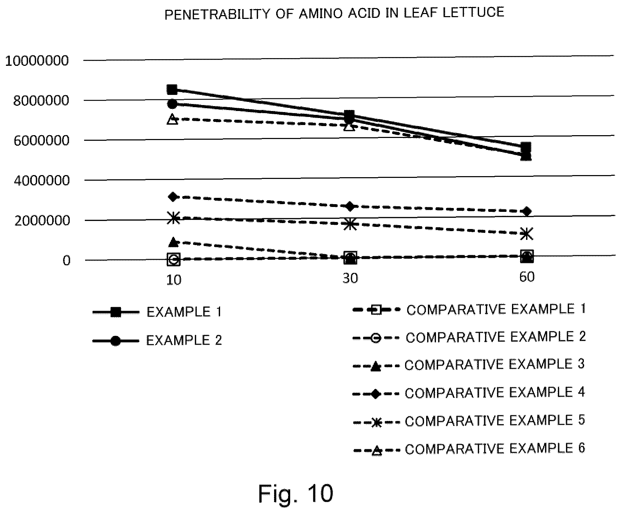

The results in rice are shown in Fig. 2, the results in soybean are shown in Fig. 6, and the results in leaf lettuce are shown in Fig. 10.

### C) Analysis of amount of nucleic acid penetrated

The analysis sample was analyzed for the amount of nucleic acid using an LC-MS/MS apparatus (LC part: DIONEX Ultimate3000, MS/MS part: Q Exactive Focus: manufactured by Thermo Fisher Scientific K.K.) under the following conditions. Column = Aclaim PR-MS 2.1 mm φ × 150 mm (manufactured by Thermo Fisher Scientific K.K.), solvent = 0% acetonitrile/acetic acid water →30% acetonitrile/acetic acid water, flow rate = 0.25 mL/min., column temperature = 40°C, detection = MS-(SIM), introduction = 2 µL of sample liquid. Quantification was performed from the MS- peak area value of adenosine monophosphate, which is the slowest in plant metabolism among the nucleic acids contained in the nucleic acid particles (manufactured by Kenkououendan Inc.), and the amounts of nucleic acid penetrated into the intralobar tissue by the penetration promoter solutions 1 to 8 (Examples 1 and 2 and Comparative Examples 1 to 6) were compared. Since the nucleic acids were originally contained in the leaf, the evaluation was performed while the average value of the nucleic acid amount analysis values of five untreated leaves was subtracted.

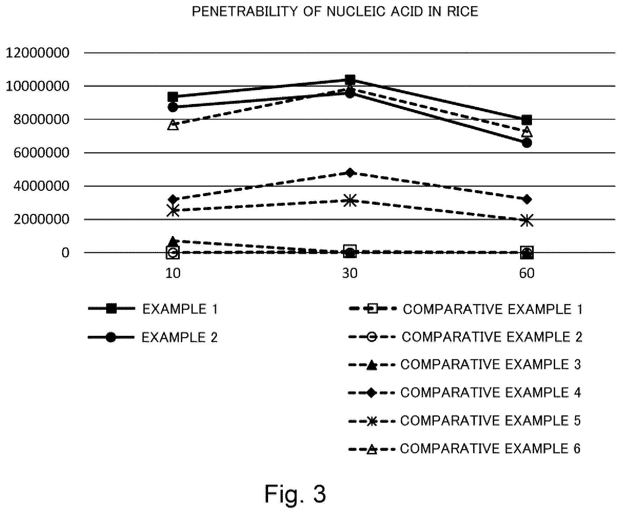

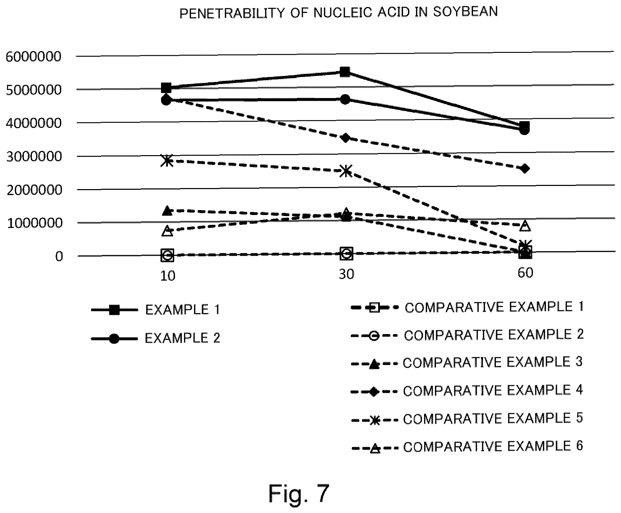

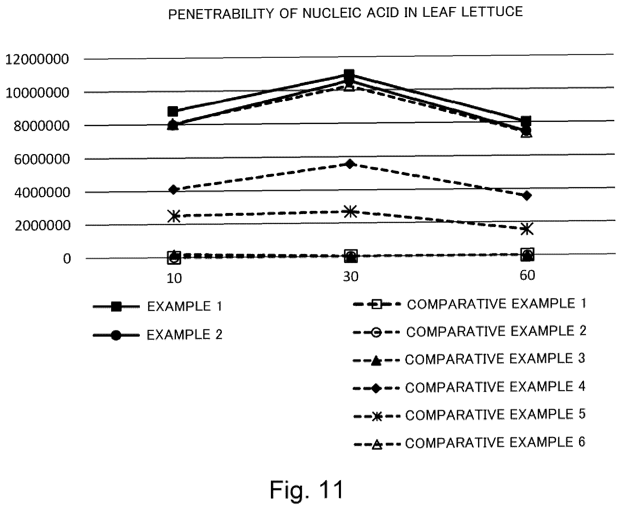

The results in rice are shown in Fig. 3, the results in soybean are shown in Fig. 7, and the results in leaf lettuce are shown in Fig. 11.

### D) Analysis of amount of phospholipid penetrated

The analysis sample was analyzed for the amount of phospholipid using an LC-MS/MS apparatus (LC part: DIONEX Ultimate3000, MS/MS part: Q Exactive Focus: manufactured by Thermo Fisher Scientific K.K.) under the following conditions. Column = Aclaim PR-MS 2.1 mm φ × 150 mm (manufactured by Thermo Fisher Scientific K.K.), solvent = 90% acetonitrile/acetic acid water →100% acetonitrile/acetic acid water, flow rate = 0.25 mL/min., column temperature = 40°C, detection = MS-(SIM), introduction = 2 µL of sample liquid. Quantification was performed from the MS-peak area value of phosphatidylcholine (C16:C16) among the phospholipids contained in the soybean-derived lecithin (manufactured by FUJIFILM Wako Pure Chemical Corporation), and the amounts of phospholipid penetrated into the intralobar tissue by the penetration promoter solutions 1 to 8 (Examples 1 and 2 and Comparative Examples 1 to 6) were compared. Since the phospholipids were originally contained in the leaf, the evaluation was performed while the average value of the phospholipid amount analysis values of five untreated leaves was subtracted.

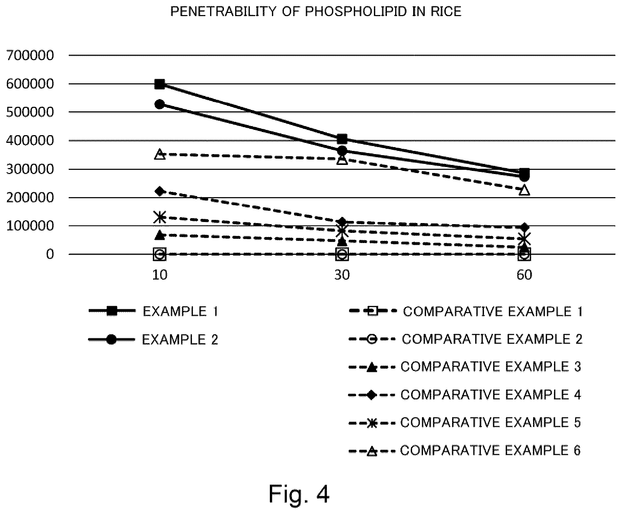

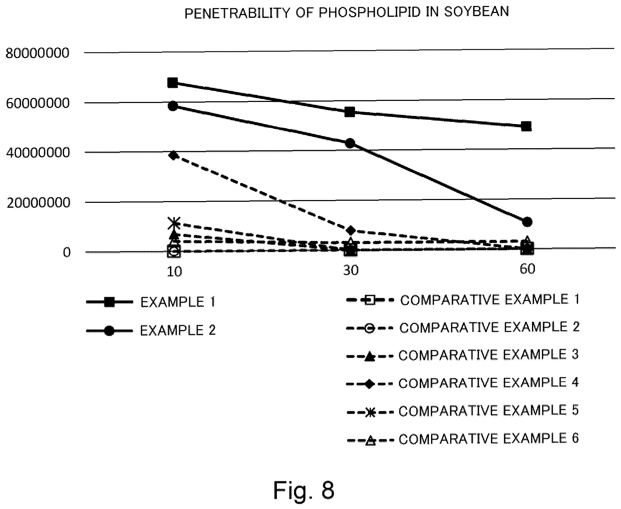

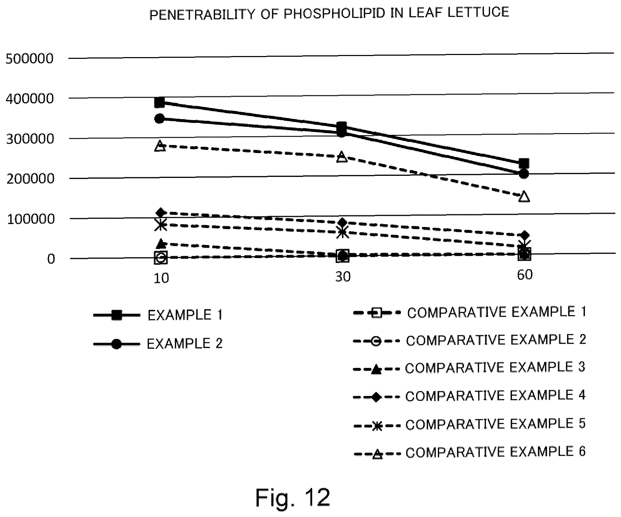

The results in rice are shown in Fig. 4, the results in soybean are shown in Fig. 8, and the results in leaf lettuce are shown in Fig. 12.

As shown in Figs. 1 to 12, more organic substances were taken into the leaves of the plants to which the penetration promoter solutions of the present invention containing an oxo fatty acid (Examples 1 and 2) were applied, as compared with the cases where the conventional surfactant-containing penetration promoter solutions (Comparative Examples 4 to 6) were applied. Note that, in the case of only linoleic acid or a potassium salt (Comparative Examples 2 and 3), the penetration promoting effect on the organic substances was hardly observed. It can be seen that the penetration promoter solutions of the present invention promote the absorption of the organic substances for plants, such as terpenes, amino acids, nucleic acids, and phospholipids, on the surfaces of the leaves of the plants to which the penetration promoter solutions were applied.

When the penetration promoter solutions of Examples 1 and 2 were used, and oleic acid (octanol/water partition coefficient = 7.73) was used instead of terpene, and the penetrability into rice and soybean were tested, the penetrability was superior as compared with the case of using the penetration promoter solutions of Comparative Examples 1 to 6. However, the penetrability slightly decreased with oleic acid as compared with terpene.

From the above results, it can be seen that the penetration promoter of the present example has an effect of increasing the penetration and/or uptake of the organic substances for plants into plant tissues. As the organic substance to be penetrated, it is considered that an organic substance having an octanol/water partition coefficient of less than about 7.73 can be most suitably used.

The octanol/water partition coefficient refers to a ratio of a substance concentration in octanol to a substance concentration in water when a substance is dissolved in a mixture of octanol and water, and is represented by Kow. For convenience, it is often indicated by a common logarithmic value Log Kow or Log P, and this is applied also to the present specification. The larger this value is, the more easily dissolved in fats and/or oils and the less easily dissolved in water. The octanol/water partition coefficient, when being 0 or a negative value, is naturally less than 7.73.

The octanol/water partition coefficient is measured according to the OECD Test Guideline (OECD Council Decision "C (81) 30 Final Appendix 1") 107 or Japanese Industrial Standard Z7260-107 (2000) "Determination of partition coefficient (1-octanol/water) - Flask shaking method". Note that the octanol/water partition coefficient values of various chemical substances are described in a Safety Data Sheet (SDS) of the Act on Confirmation, etc. of Release Amounts of Specific Chemical Substances in the Environment and Promotion of Improvements to the Management Thereof.

## Claims

1. A penetration promoter for an organic substance for plants, comprising at least one compound selected from
an oxo fatty acid, or a derivative thereof or a salt thereof, and
a hydroxy fatty acid, or a derivative thereof or a salt thereof.

2. The penetration promoter according to claim 1, wherein the oxo fatty acid and the hydroxy fatty acid are unsaturated fatty acids.

3. The penetration promoter according to claim 1, wherein the organic substance for plants is a plant hormone or a precursor in biosynthesis of the plant hormone.

4. The penetration promoter according to claim 1, wherein the organic substance for plants is at least one selected from the group consisting of an agrochemical, a plant growth promoter, a growth stimulant, an organic elicitor, and a functional nutrient, or a precursor thereof.

5. The penetration promoter according to claim 1, wherein the organic substance for plants is at least one selected from the group consisting of a terpene, a nucleic acid, an amino acid, and a phospholipid.

6. The penetration promoter according to claim 1, wherein the oxo fatty acid is represented by the following formula (I):
HOOC-(R¹)-CH=CH-C(=O)-R² (I)
wherein
R¹ represents a linear or branched, saturated or unsaturated hydrocarbon group containing 6 to 12 carbon atoms, and R² represents an alkyl group having 2 to 8 carbon atoms which may contain one or more branches and/or double bonds,
or the following formula (II):
HOOC-(R³)-C(=O)-CH=CH-R⁴ (II)
wherein
R³ represents a linear or branched, saturated or unsaturated hydrocarbon group containing 3 to 10 carbon atoms, and R⁴ represents a hydrocarbon group having 4 to 11 carbon atoms which may contain one or more branches and/or double bonds.

7. The penetration promoter according to claim 6, wherein
in the formula (I), R¹ comprises a double bond forming a conjugated double bond with a double bond between α carbon and β carbon of a carbonyl group in the formula (I), and
in the formula (II), R⁴ comprises a double bond forming a conjugated double bond with a double bond between α carbon and β carbon of a carbonyl group in the formula (II).

8. The penetration promoter according to claim 7, wherein the oxo fatty acid represented by the formula (I) and the oxo fatty acid represented by the formula (II) are ketooctadecadienoic acids.

9. The penetration promoter according to claim 7, wherein
in the formula (I), R¹ is a linear or branched hydrocarbon group having 9 carbon atoms, and R² is an alkyl group having 5 carbon atoms, and
in the formula (II), R³ is a linear or branched hydrocarbon group having 7 carbon atoms, and R⁴ has a structure of CH₃-CH₂-CH₂-CH₂-CH₂-CH=CH- having 7 carbon atoms.

10. The penetration promoter according to claim 1, wherein the oxo fatty acid is at least one selected from the group consisting of 9-oxo-10,12-octadecadienoic acid, 13-oxo-9,11-octadecadienoic acid, 5-oxo-6,8-octadecadienoic acid, 6-oxo-9,12-octadecadienoic acid, 8-oxo-9,12-octadecadienoic acid, 10-oxo-8,12-octadecadienoic acid, 11-oxo-9,12-octadecadienoic acid, 12-oxo-9,13-octadecadienoic acid, and 14-oxo-9,12-octadecadienoic acid.

11. The penetration promoter according to claim 9, wherein the oxo fatty acid represented by the formula (I) is 13-oxo-9,11-octadecadienoic acid, and the oxo fatty acid represented by the formula (II) is 9-oxo-10,12-octadecadienoic acid.

12. The penetration promoter according to claim 1, wherein the hydroxy fatty acid is represented by the following formula (III) and/or formula (IV):
HOOC-(R⁵)-CH(OH)-CH(OH)-CH=CH-CH(OH)-R⁶ (III)
HOOC-(R⁵)-CH(OH)-CH=CH-CH(OH)-CH(OH)-R⁶ (IV)
wherein
R⁵ is a linear or branched hydrocarbon group having 4 to 12 carbon atoms, which may comprise one or more double bonds and/or OH groups, and, when R⁵ comprises a double bond, the position of the double bond is not limited, and
R⁶ is a linear or branched hydrocarbon group having from 2 to 8 carbon atoms, which may comprise one or more double bonds and/or OH groups, and, when R⁶ comprises a double bond, the position of the double bond is not limited.

13. The penetration promoter according to claim 12, wherein, in the hydroxy fatty acid,
the hydrocarbon group of R⁵ has 6 to 8 carbon atoms, and
the hydrocarbon group of R⁶ has 4 to 6 carbon atoms.

14. The penetration promoter according to claim 13, wherein, in the hydroxy fatty acid,
R⁵ is a structure of -(CH₂)ₙ- (wherein n is an integer of 4 to 12), and
R⁶ is a structure of CₙH₂ₙ₊₁- (wherein n is an integer of 2 to 8).

15. The penetration promoter according to claim 14, wherein, in the hydroxy fatty acid,
R⁵ is an alkylene group having 7 carbon atoms (-(CH₂)₇-), and
R⁶ is an alkyl group having 5 carbon atoms (CH₃CH₂CH₂CH₂CH₂-).

16. The penetration promoter according to claim 1, wherein the hydroxy fatty acid is hydroxyoctadecenoic acid.

17. The penetration promoter according to claim 15, wherein the hydroxy fatty acid is 9,10,13-trihydroxy-11-octadecenoic acid or 9,12,13-trihydroxy-10-octadecenoic acid.

18. The penetration promoter according to claim 1, wherein a content proportion of the at least one compound selected from an oxo fatty acid, or a derivative thereof or a salt thereof, and a hydroxy fatty acid, or a derivative thereof or a salt thereof to the entire penetration promoter is 0.01 × 10⁻⁴ to 100 × 10⁻⁴ parts by weight relative to 100 parts by weight of the penetration promoter.

19. The penetration promoter according to claim 1, comprising at least one compound selected from an oxo fatty acid or a derivative thereof or a salt thereof, and at least one compound selected from a hydroxy fatty acid or a derivative thereof or a salt thereof.

20. The penetration promoter according to claim 19, wherein a weight ratio of the compound composed of the oxo fatty acid, or derivative thereof or salt thereof to the compound composed of the hydroxy fatty acid, or derivative thereof or salt thereof is 5 to 100 for the compound composed of the hydroxy fatty acid, or derivative thereof or salt thereof relative to 100 for the compound composed of the oxo fatty acid or derivative thereof or salt thereof.

21. A method of enhancing immunity, health, growth and/or yield of a plant by applying the penetration promoter according to claim 1, wherein the penetration promoter is applied to the plant by atomizing.

22. An agricultural composition comprising:
(a) at least one compound selected from an oxo fatty acid, or a derivative thereof or a salt thereof, and a hydroxy fatty acid, or a derivative thereof or a salt thereof; and
(b) at least one organic substance for plants.

23. The agricultural composition according to claim 22, wherein the oxo fatty acid and the hydroxy fatty acid are unsaturated fatty acids.

24. The agricultural composition according to claim 22, wherein the at least one compound selected from an oxo fatty acid, or a derivative thereof or a salt thereof, and a hydroxy fatty acid, or a derivative thereof or a salt thereof is contained in an amount of 0.01 × 10⁻⁴ to 100 × 10⁻⁴ parts by weight relative to 100 parts by weight of the agricultural composition.

25. The agricultural composition according to claim 22, wherein a proportion of the organic substance for plants to the at least one compound selected from an oxo fatty acid, or a derivative thereof or a salt thereof, and a hydroxy fatty acid, or a derivative thereof or a salt thereof is 0.1 × 10⁵ to 500 × 10⁵ in a weight ratio.

26. The agricultural composition according to claim 22, comprising at least one compound selected from an oxo fatty acid or a derivative thereof or a salt thereof, and at least one compound selected from a hydroxy fatty acid or a derivative thereof or a salt thereof.

27. The agricultural composition according to claim 26, wherein a weight ratio of the compound composed of the oxo fatty acid or derivative thereof or salt thereof to the compound composed of the hydroxy fatty acid or derivative thereof or salt thereof is 5 to 100 for the compound composed of the hydroxy fatty acid or derivative thereof or salt thereof relative to 100 for the compound composed of the oxo fatty acid or derivative thereof or salt thereof.

28. The agricultural composition according to claim 22, wherein the organic substance for plants is a plant hormone or a precursor in biosynthesis of the plant hormone.

29. The agricultural composition according to claim 22, wherein the organic substance for plants is at least one selected from the group consisting of an agrochemical, a plant growth promoter, a growth stimulant, an organic elicitor, and a functional nutrient, or a precursor thereof.

30. The agricultural composition according to claim 22, wherein the organic substance for plants is at least one selected from the group consisting of a terpene, a nucleic acid, an amino acid, and a phospholipid.

31. The agricultural composition according to claim 22, wherein the oxo fatty acid is represented by the following formula (I):
HOOC-(R¹)-CH=CH-C(=O)-R² (I)
wherein
R¹ represents a linear or branched, saturated or unsaturated hydrocarbon group containing 6 to 12 carbon atoms, and R² represents an alkyl group having 2 to 8 carbon atoms which may contain one or more branches and/or double bonds,
or the following formula (II):
HOOC-(R³)-C(=O)-CH=CH-R⁴ (II)
wherein
R³ represents a linear or branched, saturated or unsaturated hydrocarbon group containing 3 to 10 carbon atoms, and R⁴ represents a hydrocarbon group having 4 to 11 carbon atoms which may contain one or more branches and/or double bonds.

32. The agricultural composition according to claim 31, wherein
in the formula (I), R¹ comprises a double bond forming a conjugated double bond with a double bond between α carbon and β carbon of a carbonyl group in the formula (I), and
in the formula (II), R⁴ comprises a double bond forming a conjugated double bond with a double bond between α carbon and β carbon of a carbonyl group in the formula (II).

33. The agricultural composition according to claim 32, wherein the oxo fatty acid represented by the formula (I) and the oxo fatty acid represented by the formula (II) are ketooctadecadienoic acids.

34. The agricultural composition according to claim 32, wherein
in the formula (I), R¹ is a linear or branched hydrocarbon group having 9 carbon atoms, and R² is an alkyl group having 5 carbon atoms, and
in the formula (II), R³ is a linear or branched hydrocarbon group having 7 carbon atoms, and R⁴ has a structure of CH₃-CH₂-CH₂-CH₂-CH₂-CH=CH- having 7 carbon atoms.

35. The agricultural composition according to claim 22, wherein the oxo fatty acid is at least one selected from the group consisting of 9-oxo-10,12-octadecadienoic acid, 13-oxo-9,11-octadecadienoic acid, 5-oxo-6,8-octadecadienoic acid, 6-oxo-9,12-octadecadienoic acid, 8-oxo-9,12-octadecadienoic acid, 10-oxo-8,12-octadecadienoic acid, 11-oxo-9,12-octadecadienoic acid, 12-oxo-9,13-octadecadienoic acid, and 14-oxo-9,12-octadecadienoic acid.

36. The agricultural composition according to claim 34, wherein the oxo fatty acid represented by the formula (I) is 13-oxo-9,11-octadecadienoic acid, and the oxo fatty acid represented by the formula (II) is 9-oxo-10,12-octadecadienoic acid.

37. The agricultural composition according to claim 22, wherein the hydroxy fatty acid is represented by the following formula (III) and/or formula (IV):
HOOC-(R⁵)-CH(OH)-CH(OH)-CH=CH-CH(OH)-R⁶ (III)
HOOC-(R⁵)-CH(OH)-CH=CH-CH(OH)-CH(OH)-R⁶ (IV)
wherein
R⁵ is a linear or branched hydrocarbon group having 4 to 12 carbon atoms, which may comprise one or more double bonds and/or OH groups, and, when R⁵ comprises a double bond, the position of the double bond is not limited, and
R⁶ is a linear or branched hydrocarbon group having from 2 to 8 carbon atoms, which may comprise one or more double bonds and/or OH groups, and, when R⁶ comprises a double bond, the position of the double bond is not limited.

38. The agricultural composition according to claim 37, wherein, in the hydroxy fatty acid,
the hydrocarbon group of R⁵ has 6 to 8 carbon atoms, and
the hydrocarbon group of R⁶ has 4 to 6 carbon atoms.

39. The agricultural composition according to claim 38, wherein, in the hydroxy fatty acid,
R⁵ is a structure of -(CH₂)ₙ- (wherein n is an integer of 4 to 12), and
R⁶ is a structure of CₙH₂ₙ₊₁- (wherein n is an integer of 2 to 8).

40. The agricultural composition according to claim 39, wherein, in the hydroxy fatty acid,
R⁵ is an alkylene group having 7 carbon atoms (-(CH₂)₇-), and
R⁶ is an alkyl group having 5 carbon atoms (CH₃CH₂CH₂CH₂CH₂-).

41. The agricultural composition according to claim 22, wherein the hydroxy fatty acid is hydroxyoctadecenoic acid.

42. The agricultural composition according to claim 40, wherein the hydroxy fatty acid is 9,10,13-trihydroxy-11-octadecenoic acid or 9,12,13-trihydroxy-10-octadecenoic acid.

43. Use of the agricultural composition according to claim 22 for applying an organic substance for plants, which is contained therein, to a plant.

44. Use of the agricultural composition according to claim 43 for improving penetrability of the organic substance for plants in the plant.

45. Use of the agricultural composition according to claim 22 for foliage spraying.
